# FASCICULE DE BREVET EUROPEEN

(11) **EP 2 195 216 B1**
(45) Date de publication et mention de la délivrance du brevet: **12.11.2014**
(21) Numéro de dépôt: 08835608.4
(22) Date de dépôt: 19.08.2008
(51) Int. Cl.: B60T 7/12, B60W 30/18

(54) **DISPOSITIF D'ASSISTANCE AUX MANOEUVRES DE MONTEE D'UNE PENTE D'UN VEHICULE AUTOMOBILE**
HILFSVORRICHTUNG FÜR BERGBEWEGUNGEN EINES KRAFTFAHRZEUGS
ASSISTANCE DEVICE FOR UPHILL MOVEMENTS OF AN AUTOMOBILE

(30) Priorité: 03.10.2007 FR 0706917
(43) Date de publication de la demande: 16.06.2010
(73) Titulaire: Renault S.A.S., 92100 Boulogne-Billancourt (FR)
(72) Inventeur: MALLET, Mickaël, F-78180 Montigny-le-bretonneux (FR); DE RINALDIS, Alessandro, F-75018 Paris (FR); POTHIN, Richard, F-78760 Jouars-pontchartrain (FR)
(86) Numéro de dépôt international: PCT/FR2008/051507
(87) Numéro de publication internationale: WO 2009/044022

(56) Documents cités:
- EP-A- 1 327 566
- FR-A- 2 828 450
- FR-A- 2 841 199
- US-A- 4 717 207
- US-A1- 2002 065 170

## Description

L'invention concerne un dispositif d'assistance aux manoeuvres de montée d'une pente d'un véhicule automobile.

Un domaine d'application de l'invention est les véhicules automobiles routiers munis d'un frein de parcage pour permettre le démarrage en côte.

Sur les véhicules actuels, le démarrage en côte est source de stress pour l'utilisateur qui cherche autant que possible à limiter le recul du véhicule.

Le document FR-A-2 828 450 décrit un dispositif d'assistance comportant un moyen pour contrôler le desserrage des freins mécaniques du véhicule qui agissent sur des roues du véhicule, de sorte que le véhicule reste maintenu dans la pente lors d'une manoeuvre en côte sans que le conducteur ait à intervenir sur cette condition de maintien.

Il est capital que le véhicule soit libéré au bon moment afin d'éviter un recul ou une retenue lors du démarrage.

L'invention vise à obtenir un dispositif d'assistance améliorant le confort et l'agrément de conduite en démarrage en montée de côte.

A cet effet, un premier objet de l'invention est un dispositif d'assistance aux manoeuvres de montée d'une pente d'un véhicule automobile, le véhicule automobile comportant un embrayage de groupe motopropulseur pour l'entraînement du véhicule automobile, un premier frein de parcage, actionnable via une première interface par l'utilisateur, et un deuxième frein de conduite du véhicule, actionnable via une deuxième interface par l'utilisateur, pour leur serrage et leur desserrage, caractérisé en ce que le dispositif comporte :
un premier calculateur d'assistance à la commande du premier frein de parcage, comportant un moyen automatique de commande de desserrage du premier frein de parcage, lorsqu'à la fois le premier frein de parcage est serré par la première interface et le couple d'entraînement transmis par l'embrayage du véhicule est supérieur à un seuil minimum permettant le maintien dans la pente,
un deuxième calculateur d'assistance à la commande du deuxième frein de conduite, comportant un moyen automatique de commande de maintien du serrage du deuxième frein de conduite lorsqu'à la fois le deuxième frein de conduite a été serré par la deuxième interface, il a été déterminé que le véhicule est immobile et le couple transmis par l'embrayage du véhicule est inférieur au seuil minimum permettant le maintien dans la pente, un moyen automatique de commande de desserrage du deuxième frein de conduite, lorsqu'à la fois le deuxième frein de conduite est serré et le couple transmis par l'embrayage du véhicule est supérieur au seuil minimum permettant le maintien dans la pente,
un moyen de détermination de l'immobilité du véhicule, un moyen d'estimation du couple transmis par l'embrayage du véhicule, un moyen d'estimation de la pente, un moyen de calcul du seuil minimum permettant le maintien dans la pente en fonction au moins de la pente.

Suivant d'autres caractéristiques de l'invention,
- Le moyen d'estimation du couple transmis par l'embrayage du véhicule est mis en oeuvre sur un seul, premier ou deuxième, desdits calculateurs d'assistance, un moyen d'envoi de la valeur estimée de ce couple vers respectivement le deuxième ou premier calculateur étant prévu.
- Le moyen d'estimation de la pente est mis en oeuvre sur un seul, premier ou deuxième, desdits calculateurs d'assistance, un moyen d'envoi de la valeur estimée de la pente vers respectivement le deuxième ou premier calculateur étant prévu.
- Le moyen d'estimation de la pente est mis en oeuvre sous la forme d'un inclinomètre sur le premier calculateur d'assistance.
- Ou le moyen d'estimation de la pente est mis en oeuvre sous la forme d'un moyen de calcul de pente en fonction d'une mesure d'accélération longitudinale sur le deuxième calculateur d'assistance.
- Le moyen de calcul du seuil minimum permettant le maintien dans la pente est mis en oeuvre sur un seul, premier ou deuxième, desdits calculateurs d'assistance, un moyen d'envoi de la valeur estimée du seuil minimum vers respectivement le deuxième ou premier calculateur étant prévu.
- Ou le moyen de calcul du seuil minimum permettant le maintien dans la pente est mis en oeuvre sur chaque premier et deuxième calculateur d'assistance, en association avec son moyen automatique de commande de desserrage.
- Le moyen d'estimation du couple transmis par l'embrayage du véhicule est relié à l'extérieur des calculateurs à un capteur de la position d'un organe de commande de l'embrayage, en fonction de laquelle ledit couple est estimé.
- Le premier frein de parcage est mécanique et le deuxième frein de conduite est hydraulique.
- Le deuxième calculateur d'assistance, son moyen automatique de commande de maintien du serrage du deuxième frein de conduite et son moyen automatique de commande de desserrage du deuxième frein de conduite, font partie d'un dispositif électronique de pilotage des pressions hydrauliques d'un actionneur hydraulique pour la commande du deuxième frein de conduite.

L'invention sera mieux comprise à la lecture de la description qui va suivre, donnée uniquement à titre d'exemple non limitatif en référence aux dessins annexés, sur lesquels :
- les figures 1, 2, 3, 4 représentent respectivement des premier, deuxième, troisième et quatrièmes mode de réalisation du dispositif,
- la figure 5 est un schéma bloc d'un véhicule équipé d'un dispositif d'assistances aux manoeuvres en côtes selon l'invention.

L'invention est décrite ci-dessous pour un véhicule automobile sur roues 4, comportant un groupe motopropulseur ou moteur 1, par exemple à moteur à combustion interne, connecté par son arbre de sortie à un embrayage 2 dont l'arbre de sortie est connecté à l'arbre primaire d'une boîte de vitesses 3 dont l'arbre secondaire est connecté de manière connue aux roues motrices du véhicule. Un système de freinage 5 agit sur les roues 4, par exemple sur les roues motrices ou d'autres roues du véhicule. Le groupe motopropulseur ou moteur 1 est commandé au moyen d'une pédale 10 d'accélérateur ou de tout autre moyen convenable à la discrétion de l'utilisateur ou d'un organe de commande centrale 14 connecté par un bus 13 de signalisation dans le véhicule, comme par exemple un bus CAN. L'embrayage 2 coopère avec un organe de débrayage 11 qui peut être une pédale d'embrayage manoeuvrée par l'utilisateur ou un actionneur contrôlable depuis le bus 13 par l'organe de commande centrale 14 du véhicule. La boîte de vitesses 3 coopère avec un organe de commande de changement de rapport 12, comme par exemple un levier de vitesses manoeuvré par l'utilisateur ou un organe automatique de changement de rapports contrôlé depuis le bus 13 par l'organe de commande centrale 14.

Le système 5 de freinage comporte un frein 51 de parcage et un frein 52 de conduite du véhicule.

Le frein 51 est actionnable par l'utilisateur par une première interface 53, pouvant être par exemple une manette dite de « frein à main », agissant sur un actionneur 54 pour serrer et desserrer le frein 51. Le frein 51 de parcage est par exemple mécanique.

Le frein 52 de conduite du véhicule est celui destiné à freiner le véhicule en cours de trajet. Le frein 52 de conduite est également appelé frein de service. Le frein 52 de conduite est actionnable par l'utilisateur par une deuxième interface 55, pouvant être par exemple la pédale de frein, agissant sur un actionneur 56 pour serrer et desserrer le frein 52. Le frein 52 de conduite est par exemple hydraulique.

Le dispositif d'assistance comporte un premier calculateur 100 d'assistance à la commande du premier frein 51 de parcage (dit module FPA pour frein de parcage assisté), relié à son actionneur 54 pour lui envoyer des commandes de serrage ou de desserrage du frein 51.

Le dispositif d'assistance comporte un deuxième calculateur 200 d'assistance à la commande du deuxième frein 52 de conduite (dit module HSA d'assistance au démarrage en côte ou « hill start assist en anglais»), distinct du premier calculateur 100 et relié à son actionneur 56 pour lui envoyer des commandes de serrage ou de desserrage du frein 52. Dans le cas où le frein 52 est hydraulique, les pressions hydrauliques sont pilotées.

Le premier calculateur 100 d'assistance à la commande du premier frein 51 de parcage comporte un moyen automatique 101 de commande de desserrage du premier frein de parcage (dit module de décollage FPA), lorsqu'à la fois le frein 51 de parcage a été serré par la première interface 53 et le couple C d'entraînement transmis par l'embrayage 2 du véhicule est supérieur à un seuil minimum Cmin permettant le maintien dans la pente. Un tel calculateur d'assistance à la commande du frein 51 de parcage est décrit par exemple dans la demande de brevet FR-A-2 828450, qui est incorporée par référence à la présente demande de brevet.

Le deuxième calculateur 200 d'assistance à la commande du deuxième frein 52 de conduite comporte un moyen automatique 202 de commande de maintien du serrage du frein 52 de conduite lorsqu'à la fois le frein 52 de conduite a été serré par la deuxième interface 55, il a été déterminé que le véhicule est immobile et le couple C transmis par l'embrayage 2 du véhicule est inférieur au seuil minimum Cmin permettant le maintien dans la pente.

Le deuxième calculateur 200 d'assistance à la commande du deuxième frein 52 de conduite comporte en outre un moyen automatique 201 de commande de desserrage du frein 52 de conduite (dit module de décollage HSA), lorsqu'à la fois le frein 52 de conduite est serré et le couple C transmis par l'embrayage 2 du véhicule est supérieur au seuil minimum Cmin permettant le maintien dans la pente.

Le deuxième calculateur 200 d'assistance à la commande du deuxième frein 52 de conduite est par exemple mis en oeuvre sur un système ESP.

Dans un mode de réalisation, le deuxième calculateur 200 d'assistance, son moyen automatique 202 de commande de maintien du serrage du frein 52 de conduite et son moyen automatique 201 de commande de son desserrage, font partie d'un dispositif électronique de pilotage des pressions hydrauliques de l'actionneur hydraulique 56 pour la commande du frein 52 de conduite.

Le dispositif d'assistance comporte en outre un moyen 301 d'estimation du couple transmis par l'embrayage du véhicule (module dit d'apprentissage) et un moyen 302 d'estimation de la pente.

Un moyen de calcul du seuil minimum Cmin permettant le maintien dans la pente en fonction au moins de la pente est également prévu.

Le dispositif peut s'intégrer dans un système global dont l'architecture matérielle comprend un bloc hydraulique de freinage de type ESP conventionnel qui permet de piloter les pressions sur chaque étrier et qui est équipé au moins d'un capteur de pression maître-cylindre, un système frein de parking assisté (FPA) incluant l'actionneur et le calculateur, une mesure de la pente, du régime moteur, de la vitesse des roues, des positions des pédales d'accélérateur et d'embrayage, une information sur le type de rapport de boîte engagé (marche avant, marche arrière, neutre).

Le dispositif comporte deux systèmes embarqués sur le véhicule :
- Le FPA 100 qui assure l'immobilisation du véhicule sur action de l'utilisateur et qui correspond au frein de parcage. Lorsque le frein de parcage est serré, le FPA 100 remplit par ailleurs une fonction d'aide au démarrage en montée de côte, en desserrant le frein de parcage au moment opportun.
- Le HSA 200 est aussi une fonction d'aide au démarrage en montée de côte, mais celle-ci se déclenche automatiquement lors de l'arrêt du véhicule en maintenant la pression de freinage exercée par l'utilisateur. La pression de freinage doit aussi être relâchée au moment opportun.

Le module 301 d'apprentissage réalise une estimation du couple C transmis par l'embrayage, par exemple par apprentissage de la caractéristique de l'embrayage et en utilisant la position de l'organe 11 ou pédale d'embrayage.

Dans un mode de réalisation, le module de décollage 201 de la fonction HSA est codé dans le calculateur ESP.

Dans un mode de réalisation, le calculateur, que ce soit le calculateur 100 FPA ou le calculateur 200 HSA et/ou ESP, qui réalise l'apprentissage 301 de la caractéristique d'embrayage est relié en filaire, donc pas par le bus 13, au capteur de position de l'organe 11 ou pédale d'embrayage.

Dans un mode de réalisation, pour l'apprentissage, un calculateur d'injection fournit d'autres informations par le bus 13.

Le module de décollage, que ce soit le module FPA 101 ou le module HSA 201, nécessite le couple C estimé passant par l'embrayage 2. Ce couple C est calculé dans le module d'apprentissage 301.

Dans un mode de réalisation, le module de décollage 101, 201 utilise aussi des informations existantes sur le bus 13, comme par exemple le rapport engagé, et la pente.

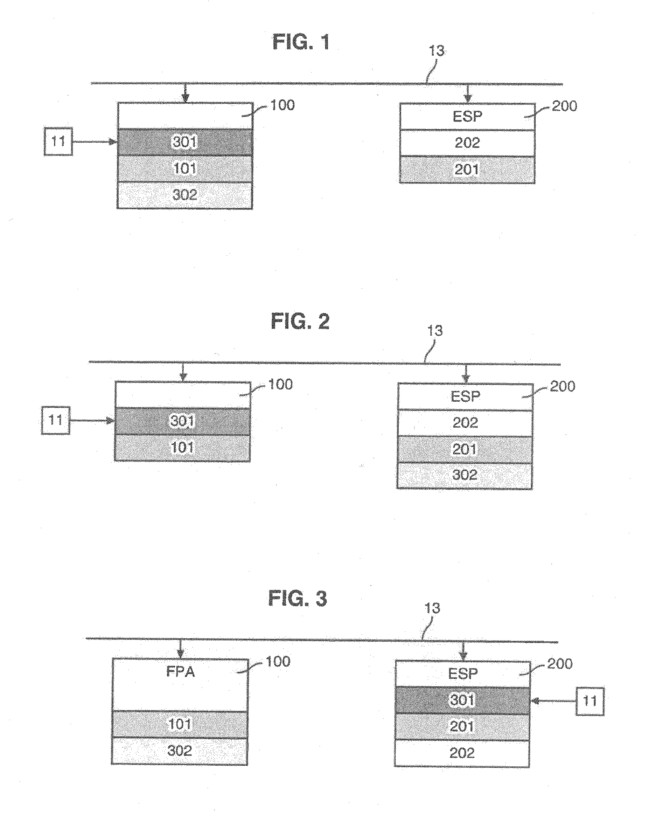

Dans le mode de réalisation de la figure 1, l'apprentissage 301 est implémenté dans le module FPA 100 et on utilise l'inclinomètre 302 du FPA 100 pour mesurer la pente. Dans ce cas, les échanges sur le bus 13 entre le FPA 100 et le HSA 200 sont les suivants : du FPA 100 vers le HSA 200 : la pente et le couple C estimé.

Dans le mode de réalisation de la figure 2, l'apprentissage 301 est implémenté dans le module FPA 100 et on utilise l'accéléromètre longitudinal 302 du HSA 200 pour mesurer la pente. Dans ce cas, les échanges sur le bus 13 entre le FPA 100 et le HSA 200 sont les suivants :
- du HSA 200 vers le FPA 100 : la pente,
- du FPA 100 vers le HSA 200 : le couple C estimé.

Dans le mode de réalisation de la figure 3, l'apprentissage 301 est implémenté dans le module HSA 200 et on utilise l'inclinomètre 302 du FPA 100 pour mesurer la pente. Dans ce cas, les échanges sur le bus 13 entre le FPA 100 et le HSA 200 sont les suivants :
- du HSA 200 vers le FPA 100 : le couple C estimé,
- du FPA 100 vers le HSA 200 : la pente.

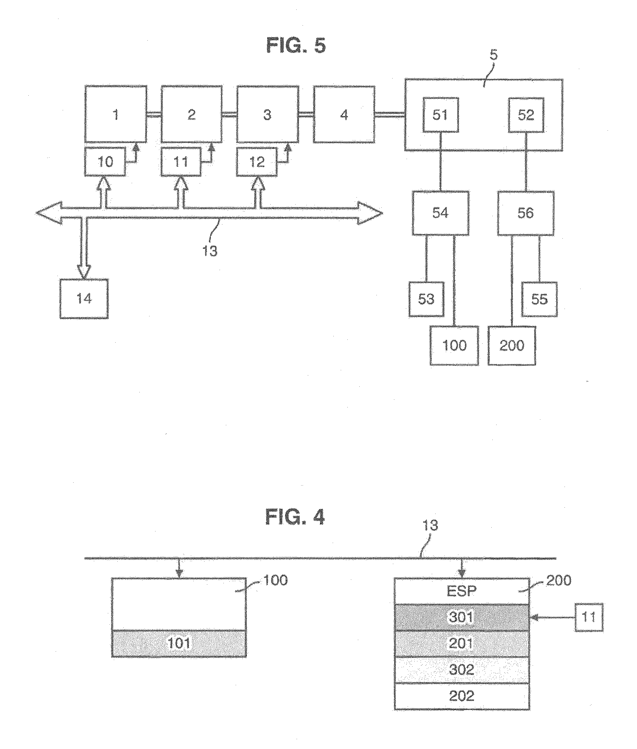

Dans le mode de réalisation de la figure 4, l'apprentissage 301 est implémenté dans le module HSA 200 et on utilise l'accéléromètre longitudinal 302 du HSA 200 pour mesurer la pente. Dans ce cas, les échanges sur le bus 13 entre le FPA 100 et le HSA 200 sont les suivants : du HSA 200 vers le FPA 100 : la pente et le couple C estimé.

Le dispositif est préférentiellement réalisé sous forme d'un programme enregistré et exécuté sur les calculateurs.

Un avantage consiste en ce que l'on tire profit de la redondance de fonctions pour optimiser la répartition du code informatique et/ou des capteurs, par exemple en exploitant l'inclinomètre du FPA pour fournir l'information de pente au HSA, qui ne nécessite plus de module intégrant l'accéléromètre longitudinal, ou en exploitant l'information du capteur de course d'embrayage pour les deux prestations sans dupliquer le capteur.

Un autre avantage est de minimiser l'écart de prestation entre les freins 51, 52 en exploitant les mêmes signaux et en partageant certains modules logiciels.

Un autre avantage est d'éviter les dysfonctionnements dus à une mauvaise interaction entre les deux systèmes FPA et HSA.

## Revendications

1. Dispositif d'assistance aux manoeuvres de montée d'une pente d'un véhicule automobile, le véhicule automobile comportant un embrayage (2) de groupe motopropulseur pour l'entraînement du véhicule automobile, un premier frein (51) de parcage, actionnable via une première interface (53) par l'utilisateur, et un deuxième frein (52) de conduite du véhicule, actionnable via une deuxième interface (55) par l'utilisateur, pour leur serrage et leur desserrage, ce dipositif comportant :
un moyen de détermination de l'immobilité du véhicule, un moyen (301) d'estimation du couple transmis par l'embrayage (2) du véhicule, un moyen (302) d'estimation de la pente, un moyen de calcul du seuil minimum permettant le maintien dans la pente en fonction au moins de la pente,
un premier calculateur (100) d'assistance à la commande du premier frein de parcage, comportant un moyen automatique (101) de commande de desserrage du premier frein (51) de parcage, lorsqu'à la fois le premier frein (51) de parcage est serré par la première interface (53) et le couple d'entraînement transmis par l'embrayage (2) du véhicule est supérieur à un seuil minimum permettant le maintien dans la pente,
**caractérisé en ce que** le dispositif comporte :
un deuxième calculateur (200) d'assistance à la commande du deuxième frein (52) de conduite, comportant un moyen automatique (202) de commande de maintien du serrage du deuxième frein (52) de conduite lorsqu'à la fois le deuxième frein (52) de conduite a été serré par la deuxième interface (55), il a été déterminé que le véhicule est immobile et le couple transmis par l'embrayage (2) du véhicule est inférieur au seuil minimum permettant le maintien dans la pente, un moyen automatique (201) de commande de desserrage du deuxième frein (52) de conduite, lorsqu'à la fois le deuxième frein (52) de conduite est serré et le couple transmis par l'embrayage du véhicule est supérieur au seuil minimum permettant le maintien dans la pente.

2. Dispositif suivant la revendication 1, **caractérisé en ce que**
le moyen (301) d'estimation du couple transmis par l'embrayage (2) du véhicule est mis en oeuvre sur un seul, premier ou deuxième, desdits calculateurs (100, 200) d'assistance, un moyen (13) d'envoi de la valeur estimée de ce couple vers respectivement le deuxième ou premier calculateur (200, 100) étant prévu.

3. Dispositif suivant l'une quelconque des revendications précédentes, **caractérisé en ce que**
le moyen (302) d'estimation de la pente est mis en oeuvre sur un seul, premier ou deuxième, desdits calculateurs (100, 200) d'assistance, un moyen (13) d'envoi de la valeur estimée de la pente vers respectivement le deuxième ou premier calculateur (200, 100) étant prévu.

4. Dispositif suivant l'une quelconque des revendications précédentes, **caractérisé en ce que** le moyen (302) d'estimation de la pente est mis en oeuvre sous la forme d'un inclinomètre sur le premier calculateur (100) d'assistance.

5. Dispositif suivant l'une quelconque des revendications précédentes, **caractérisé en ce que** le moyen (302) d'estimation de la pente est mis en oeuvre sous la forme d'un moyen de calcul de pente en fonction d'une mesure d'accélération longitudinale sur le deuxième calculateur (200) d'assistance.

6. Dispositif suivant l'une quelconque des revendications 1 à 5, **caractérisé en ce que** le moyen de calcul du seuil minimum permettant le maintien dans la pente est mis en oeuvre sur un seul, premier ou deuxième, desdits calculateurs (100, 200) d'assistance, un moyen (13) d'envoi de la valeur estimée du seuil minimum vers respectivement le deuxième ou premier calculateur étant prévu.

7. Dispositif suivant l'une quelconque des revendications 1 à 5, **caractérisé en ce que** le moyen de calcul du seuil minimum permettant le maintien dans la pente est mis en oeuvre sur chaque premier et deuxième calculateur (100, 200) d'assistance, en association avec son moyen automatique (101, 201) de commande de desserrage.

8. Dispositif suivant l'une quelconque des revendications précédentes, **caractérisé en ce que** le moyen (301) d'estimation du couple transmis par l'embrayage (2) du véhicule est relié à l'extérieur des calculateurs (100, 200) à un capteur de la position d'un organe (11) de commande de l'embrayage (2), en fonction de laquelle ledit couple est estimé.

9. Dispositif suivant l'une quelconque des revendications précédentes, **caractérisé en ce que** le premier frein (51) de parcage est mécanique et le deuxième frein (52) de conduite est hydraulique.

10. Dispositif suivant l'une quelconque des revendications précédentes, **caractérisé en ce que** le deuxième calculateur (200) d'assistance, son moyen automatique (202) de commande de maintien du serrage du deuxième frein (52) de conduite et son moyen automatique (201) de commande de desserrage du deuxième frein (52) de conduite, font partie d'un dispositif électronique de pilotage des pressions hydrauliques d'un actionneur hydraulique (56) pour la commande du deuxième frein (52) de conduite.

## Patentansprüche

1. Assistenzvorrichtung für die Bergauffahrmanöver eines Kraftfahrzeugs, wobei das Kraftfahrzeug eine Kupplung (2) einer Antriebseinheit für den Antrieb des Kraftfahrzeugs, eine erste Parkbremse (51), die über eine erste Schnittstelle (53) vom Benutzer betätigbar ist, und eine zweite Fahrbremse (52) des Fahrzeugs aufweist, die über eine zweite Schnittstelle (55) vom Benutzer betätigbar ist, um sie anzuziehen und zu lösen, wobei diese Vorrichtung aufweist:
eine Einrichtung zur Bestimmung des Stillstands des Fahrzeugs, eine Einrichtung (301) zur Schätzung des von der Kupplung (2) des Fahrzeugs übertragenen Moments, eine Einrichtung (302) zur Schätzung der Steigung, eine Einrichtung zur Berechnung der Mindestschwelle, die den Halt in der Steigung erlaubt, abhängig mindestens von der Steigung,
einen ersten Hilfsrechner (100) für die Steuerung der ersten Parkbremse, der eine automatische Einrichtung (101) zur Steuerung des Lösens der ersten Parkbremse (51) aufweist, wenn gleichzeitig die erste Parkbremse (51) von der ersten Schnittstelle (53) angezogen wird und das von der Kupplung (2) des Fahrzeugs übertragene Antriebsmoment höher als eine Mindestschwelle ist, die den Halt in der Steigung erlaubt,
**dadurch gekennzeichnet, dass** die Vorrichtung aufweist:
einen zweiten Hilfsrechner (200) für die Steuerung der zweiten Fahrbremse (52), der eine automatische Einrichtung (202) zur Steuerung der Aufrechterhaltung des Anziehens der zweiten Fahrbremse (52), wenn gleichzeitig die zweite Fahrbremse (52) von der zweiten Schnittstelle (55) angezogen wurde, bestimmt wurde, dass das Fahrzeug steht, und das von der Kupplung (2) des Fahrzeugs übertragene Moment niedriger als die Mindestschwelle ist, die den Halt in der Steigung erlaubt, und eine automatische Einrichtung (201) zur Steuerung des Lösens der zweiten Fahrbremse (52) aufweist, wenn gleichzeitig die zweite Fahrbremse (52) angezogen ist und das von der Kupplung des Fahrzeugs übertragene Moment höher als die Mindestschwelle ist, die den Halt in der Steigung erlaubt.

2. Vorrichtung nach Anspruch 1, **dadurch gekennzeichnet, dass** die Einrichtung (301) zur Schätzung des von der Kupplung (2) des Fahrzeugs übertragenen Moments bei einem einzigen, dem ersten oder dem zweiten, der Hilfsrechner (100, 200) eingesetzt wird, wobei eine Einrichtung (13) zum Senden des geschätzten Werts dieses Moments an den zweiten bzw. ersten Rechner (200, 100) vorgesehen ist.

3. Vorrichtung nach einem der vorhergehenden Ansprüche, **dadurch gekennzeichnet, dass** die Einrichtung (302) zur Schätzung der Steigung bei einem einzigen, dem ersten oder dem zweiten, der Hilfsrechner (100, 200) eingesetzt wird, wobei eine Einrichtung (13) zum Senden des geschätzten Werts der Steigung an den zweiten bzw. ersten Rechner (200, 100) vorgesehen ist.

4. Vorrichtung nach einem der vorhergehenden Ansprüche, **dadurch gekennzeichnet, dass** die Einrichtung (302) zur Schätzung der Steigung in Form eines Neigungsmessers im ersten Hilfsrechner (100) eingesetzt wird.

5. Vorrichtung nach einem der vorhergehenden Ansprüche, **dadurch gekennzeichnet, dass** die Einrichtung (302) zur Schätzung der Steigung in Form einer Einrichtung zur Steigungsberechnung abhängig von einer Längsbeschleunigungsmessung im zweiten Hilfsrechner (200) eingesetzt wird.

6. Vorrichtung nach einem der Ansprüche 1 bis 5, **dadurch gekennzeichnet, dass** die Einrichtung zur Berechnung der Mindestschwelle, die den Halt in der Steigung erlaubt, in einem einzigen, dem ersten oder dem zweiten, der Hilfsrechner (100, 200) eingesetzt wird, wobei eine Einrichtung (13) zum Senden des geschätzten Werts der Mindestschwelle an den zweiten bzw. den ersten Rechner vorgesehen ist.

7. Vorrichtung nach einem der Ansprüche 1 bis 5, **dadurch gekennzeichnet, dass** die Einrichtung zur Berechnung der Mindestschwelle, die den Halt in der Steigung erlaubt, in jedem ersten und zweiten Hilfsrechner (100, 200) zusammen mit seiner automatischen Einrichtung (101, 201) der Lösungssteuerung eingesetzt wird.

8. Vorrichtung nach einem der vorhergehenden Ansprüche, **dadurch gekennzeichnet, dass** die Einrichtung (301) zur Schätzung des von der Kupplung (2) des Fahrzeug übertragenen Moments außerhalb der Rechner (100, 200) mit einem Sensor der Position eines Steuerorgans (11) der Kupplung (2) verbunden ist, abhängig von der das Moment geschätzt wird.

9. Vorrichtung nach einem der vorhergehenden Ansprüche, **dadurch gekennzeichnet, dass** die erste Parkbremse (51) mechanisch und die Fahrbremse (52) hydraulisch ist.

10. Vorrichtung nach einem der vorhergehenden Ansprüche, **dadurch gekennzeichnet, dass** der zweite Hilfsrechner (200), seine automatische Einrichtung (202) zur Steuerung der Aufrechterhaltung des Anziehens der zweiten Fahrbremse (52) und seine automatische Einrichtung (201) zur Steuerung des Lösens der zweiten Fahrbremse (52) Teil einer elektronischen Steuervorrichtung der hydraulischen Drücke eines hydraulischen Aktuators (56) zur Steuerung der zweiten Fahrbremse (52) sind.

## Claims

1. Assistance device for uphill maneuvers of an automobile, the automobile comprising a drive train clutch (2) for driving the automobile, a first parking brake (51), which can be actuated via a first interface (53) by the user, and a second vehicle driving brake (52), which can be actuated via a second interface (55) by the user, for activating them and releasing them, this device comprising a means of determining the immobility of the vehicle, a means (301) of estimating the torque transmitted by the vehicle clutch (2), a means (302) of estimating the slope, a means of calculating the minimum threshold for maintaining the vehicle on the slope at least according to the slope,
a first assistance computer (100) controlling the first parking brake, comprising an automatic means (101) of commanding the release of the first parking brake (51), when both the first parking brake (51) is activated via the first interface (53) and the driving torque transmitted by the vehicle clutch (2) is greater than a minimum threshold for maintaining the vehicle on the slope,
**characterized in that** the device comprises:
a second assistance computer (200) controlling the second driving brake (52), comprising an automatic means (202) for controlling the maintaining of the activation of the second driving brake (52) when, at the same time, the second driving brake (52) has been activated via the second interface (55), it has been determined that the vehicle is immobile and the torque transmitted by the vehicle clutch (2) is less than the minimum threshold for maintaining the vehicle on the slope, an automatic means (201) for controlling the release of the second driving brake (52) when both the second driving brake (52) is activated and the torque transmitted by the vehicle clutch is greater than the minimum threshold for maintaining the vehicle on the slope.

2. Device according to Claim 1, **characterized in that** the means (301) for estimating the torque transmitted by the vehicle clutch (2) is implemented on just one, the first or the second, of said assistance computers (100, 200), a means (13) of sending the estimated value of this torque to, respectively, the second or first computer (200, 100) being provided.

3. Device according to either of the preceding claims, **characterized in that**
the means (302) of estimating the slope is implemented on just one, the first or second, of said assistance computers (100, 200), a means (13) of sending the estimated value of the slope to, respectively, the second or first computer (200, 100) being provided.

4. Device according to any one of the preceding claims, **characterized in that** the means (302) of estimating the slope is implemented in the form of an inclinometer on the first assistance computer (100).

5. Device according to any one of the preceding claims, **characterized in that** the means (302) of estimating the slope is implemented in the form of a means of calculating slope as a function of a measurement of longitudinal acceleration on the second assistance computer (200).

6. Device according to any one of Claims 1 to 5, **characterized in that** the means of calculating the minimum threshold for maintaining the vehicle on the slope is implemented on just one, the first or second, of said assistance computers (100, 200), a means (13) of sending the estimated value of the minimum threshold to, respectively, the second or first computer being provided.

7. Device according to any one of Claims 1 to 5, **characterized in that** the means of calculating the minimum threshold for maintaining the vehicle on the slope is implemented on each first and second assistance computer (100, 200), in association with its automatic release controlling means (101, 201).

8. Device according to any one of the preceding claims, **characterized in that** the means (301) of estimating the torque transmitted by the vehicle clutch (2) is linked, externally from the computers (100, 200), to a sensor sensing the position of a control member (11) of the clutch (2), according to which said torque is estimated.

9. Device according to any one of the preceding claims, **characterized in that** the first parking brake (51) is mechanical and the second driving brake (52) is hydraulic.

10. Device according to any one of the preceding claims, **characterized in that** the second assistance computer (200), its automatic means (202) of controlling the maintaining of the activation of the second driving brake (52) and its automatic means (201) of controlling the release of the second driving brake (52), form part of an electronic device for controlling the hydraulic pressures of a hydraulic actuator (56) for controlling the second driving brake (52).
